# EUROPÄISCHE PATENTANMELDUNG

(11) **EP 3 364 222 A1**
(43) Veröffentlichungstag der Anmeldung: **22.08.2018**
(21) Anmeldenummer: 17204581.7
(22) Anmeldetag: 30.11.2017
(51) Int. Cl.: G02B 6/38, G02B 6/32

(54) **STECKVERBINDER UND VERFAHREN ZUR HERSTELLUNG**

(30) Priorität: 16.02.2017 DE 102017103170
(71) Anmelder: Euromicron Werkzeuge GmbH, 35764 Sinn-Fleisbach (DE)
(72) Erfinder: WERNER, Christoph, 35649 Bischoffen (DE); WAGNER, Thomas, 35687 Dillenburg (DE)
(74) Vertreter: advotec.

(57) **Zusammenfassung**

Die Erfindung betrifft einen Steckverbinder (10) zur lösbaren Verbindung von Lichtwellenleitern, insbesondere Linsenstecker oder dergleichen, sowie ein Verfahren zu dessen Herstellung, wobei der Steckverbinder eine Positioniereinrichtung (11) zur Aufnahme und Positionierung eines Faserendes einer optischen Faser eines Lichtwellenleiters, ein Steckergehäuse (12) zur Aufnahme der Positioniereinrichtung und einen relativ zum Steckergehäuse radial drehbaren und axial verschiebbaren Handgriff (13) umfasst, wobei der Handgriff eine Verriegelungshülse (18) und das Steckergehäuse einen aus einem Metall ausgebildeten Kupplungsabschnitt (15) zur Verbindung und Verriegelung des Steckverbinders mit einem weiteren Steckverbinder oder einer Buchse aufweist, wobei das Steckergehäuse eine Führungshülse (17) für die Verriegelungshülse ausbildet, wobei das Steckergehäuse zumindest teilweise mit einer amorphen Kohlenstoffschicht beschichtet ist.

## Beschreibung

Die Erfindung betrifft einen Steckverbinder zur lösbaren Verbindung von Lichtwellenleitern, insbesondere Linsenstecker oder dergleichen, sowie ein Verfahren zur dessen Herstellung, wobei der Steckverbinder eine Positioniereinrichtung zur Aufnahme und Positionierung eines Faserendes einer optischen Faser eines Lichtwellenleiters, ein Steckergehäuse zur Aufnahme der Positioniereinrichtung, einen relativ zum Steckergehäuse radial drehbaren und axial verschiebbaren Handgriff umfasst, wobei der Handgriff eine Verriegelungshülse und das Steckergehäuse einen aus einem Metall ausgebildeten Kupplungsabschnitt zur Verbindung und Verriegelung des Steckverbinders mit einem weiteren Steckverbinder oder einer Buchse aufweisen, wobei das Steckergehäuse eine Führungshülse für die Verriegelungshülse ausbildet.

Derartige Steckverbinder bzw. Linsenstecker werden regelmäßig zur lösbaren Verbindung von Lichtwellenleitern bzw. Glasfaserkabeln zur Ausbildung einer Stecker-Verbindung oder auch einer Stecker-Buchse-Verbindung verwendet. Die Steckverbinder sollen dabei eine möglichst geringe Signaldämpfung und eine hohe Rückflussdämpfung aufweisen.

So sind Steckverbinder bzw. so genannte Linsenstecker bekannt, bei denen an einem Faserende einer optischen Faser eines Lichtwellenleiters, eine Linse angeordnet ist. An einem gegenüberliegenden Linsenstecker bzw. einer Buchse ist ebenfalls an einem Faserende bzw. Faserausgang eine Linse angeordnet, die am Faserende austretendes Licht kollimiert, welches am gegenüberliegenden Linsenstecker mit einer baugleichen Linse wieder auf eine Faserendfläche eines Faserendes fokussiert wird. Von Vorteil ist hier, dass mittels eines Linsensteckers eine Mehrzahl von im Lichtwellenleiter parallel verlaufenden Fasern unabhängig voneinander an dem Linsenstecker über jeweils Linsen mit einem weiteren Linsenstecker verbunden werden kann. Die Linsenstecker bzw. Steckverbinder weisen dann entsprechend der Faseranzahl bis zu acht Linsen auf. Um eventuelle Übertragungsverluste möglichst gering zu halten, müssen die Linsen relativ zueinander bei der Ausbildung der Steckverbindung besonders genau positioniert werden.

Die bekannten Steckverbinder bzw. Linsenstecker sind im Wesentlichen aus einem Steckergehäuse und einem Handgriff ausgebildet. Das Steckergehäuse bildet an einem Steckerende einen Kupplungsabschnitt zur Verbindung und Verriegelung des Steckverbinders mit einem weiteren Steckverbinder oder einer Buchse aus. Der Handgriff weist eine Verriegelungshülse auf, die auf dem Steckergehäuse drehbar und axial verschiebbar angeordnet ist. Das Steckergehäuse bildet dazu eine Führungshülse für die Verriegelungshülse aus. Nach dem Zusammenführen zweier Linsenstecker bzw. derer Kupplungsabschnitte kann beispielsweise mit der Verriegelungshülse der Linsenstecker an dem weiteren Linsenstecker fest fixiert werden. Die Verriegelungshülse kann dazu mit einem Gewinde oder einem Bajonettverschluss ausgebildet sein und formschlüssig in den weiteren Kupplungsabschnitt des gegenüberliegenden, weiteren Linsensteckers eingreifen.

Weiter ist es bekannt, das Steckergehäuse bzw. zumindest den Kupplungsabschnitt des Steckergehäuses aus Metall auszubilden, um eine hohe Anzahl von Verbindungszyklen bei gleichzeitig rauen Umgebungsbedingungen realisieren zu können. Gerade auch durch eine Aufweitung eines Lichtstrahls mittels der Linsen wird es möglich Verschmutzungen und Vibrationen des Linsensteckers zuzulassen. Derartige Linsenstecker sind daher regelmäßig auch für einen Einsatz bei rauen Umgebungsbedingungen ausgebildet und entsprechend abgedichtet, beispielsweise gemäß "IP67", bzw. entsprechend der Norm "MIL-DTL-83526/20" oder "MIL-DTL-83526/21" ausgebildet. Insbesondere die aus Metall ausgebildeten Bauteile des Kupplungsabschnitts und gegebenenfalls auch andere Bauteile des Steckverbinders, wie beispielsweise das Steckergehäuse, die Verriegelungshülse und die Führungshülse, sind aus Aluminium ausgebildet, da dies vergleichsweise leicht ist und gut spanend bearbeitbar ist. Um einen ausreichenden Korrosionsschutz zu erzielen, sieht insbesondere die zuvor zitierte Normung vor, die betreffenden Bauteile mit einer spezifizierten Harteloxalschicht zu versehen. Dadurch werden zumindest die Bauteile aus Aluminium besonders verschleiß- und korrosionsbeständig. Da die Steckverbinder besonders hohen Genauigkeitsanforderungen genügen müssen, ist es jedoch nachteilig, dass das Harteloxieren einen Schichtauftrag bzw. eine Maßerhöhung der betreffenden Bauteile von bis zu 50 µm bewirkt. Diese Bauteile sind daher mit einem Untermaß herzustellen, welches entsprechend einem Auftrag auf einer Oberfläche durch das Harteloxieren gewählt ist. Eine Herstellung, insbesondere des Steckergehäuses, welches hohen Genauigkeitsanforderungen genügen muss, ist daher besonders aufwendig, insbesondere da das Harteloxieren regelmäßig unabhängig von einer spanenden Bearbeitung der Bauteile von beispielsweise Drittfirmen ausgeführt wird, was Qualitätsmängel bei der Herstellung zur Folge haben kann.

Der vorliegenden Erfindung liegt daher die Aufgabe zugrunde, einen Steckverbinder und ein Verfahren zu dessen Herstellung vorzuschlagen, der bzw. das eine vereinfachte Herstellung mit hoher Qualität ermöglicht.

Diese Aufgabe wird durch einen Steckverbinder mit den Merkmalen des Anspruchs 1, eine Lichtwellenleitergrundkonfiguration mit den Merkmalen des Anspruchs 15 und ein Verfahren mit den Merkmalen des Anspruchs 16 gelöst.

Der erfindungsgemäße Steckverbinder zur lösbaren Verbindung von Lichtwellenleitern, insbesondere Linsenstecker oder dergleichen, umfasst eine Positioniereinrichtung zur Aufnahme und Positionierung eines Faserendes einer optischen Faser eines Lichtwellenleiters, ein Steckergehäuse zur Aufnahme der Positioniereinrichtung und ein relativ zum Steckergehäuse radial drehbaren und axial verschiebbaren Handgriff, wobei der Handgriff eine Verriegelungshülse und das Steckergehäuse einen aus einem Metall ausgebildeten Kupplungsabschnitt zur Verbindung und Verriegelung des Steckverbinders mit einem weiteren Steckverbinder oder einer Buchse aufweisen, wobei das Steckergehäuse eine Führungshülse für die Verriegelungshülse ausbildet, wobei das Steckergehäuse zumindest teilweise mit einer amorphen Kohlenstoffschicht beschichtet ist.

Die Schicht aus amorphen Kohlenstoff auf dem Steckergehäuse, insbesondere dem Kupplungsabschnitt und soweit erforderlich, auf der Führungshülse, bewirkt, dass das Steckergehäuse eine Oberfläche mit einer hohen Abriebfestigkeit aufweist und insbesondere vor Oxidation bzw. Korrosion durch beispielsweise Seewasser geschützt ist. Weiter weist die Beschichtung eine Härte von ca. 2.500 bis 3.000 HV auf. Darüber hinaus hat die Beschichtung eine schwarze Farbe, so dass eventuelle Beschädigungen der Beschichtung leicht erkannt werden können. Dadurch, dass das Steckergehäuse bzw. dessen Oberfläche mit der amorphen Kohlenstoffschicht beschichtet ist, wird es möglich, auf eine Harteloxalbeschichtung des Metalls bzw. Aluminiums des Kupplungsabschnitts zu verzichten. Es muss dann nicht mehr zwangsläufig Aluminium als Metall zur Ausbildung des Kupplungsabschnitts bzw. des Steckergehäuses verwendet werden, sondern es ist dann prinzipiell jedes beliebige, für einen Einsatzzweck des Steckverbinders geeignete Metall oder eine Metalllegierung verwendbar. Die bei einigen Metallen sonst nachteilige Eigenschaft, schnell an ihrer Oberfläche eine Oxidationsschicht auszubilden, ist durch die Beschichtung mit dem amorphen Kohlenstoff nicht mehr von Bedeutung. Um einen möglichst leichten Steckverbinder zu erhalten kann beispielsweise als ein Metall Titan, und um einen möglichst stabilen Kupplungsabschnitt zu erhalten, Stahl verwendet werden. Das Steckergehäuse kann daher auch frei von Aluminium ausgebildet werden.

Da die amorphe Kohlenstoffschicht im Vergleich zu einer Harteloxalschicht dünn ausgebildet werden kann, besteht nicht mehr zwangsläufig die Notwendigkeit das Steckergehäuse mit einem Untermaß herzustellen, um abschließend geforderte Toleranzen des Steckergehäuses einzuhalten. Dies führt dazu, dass nicht nur die Herstellung des Steckergehäuses wesentlich vereinfacht wird, sondern auch weniger Fehlteile in Folge von Toleranzüberschreitungen bei der Herstellung anfallen. Darüber hinaus ist durch die amorphe Kohlenstoffschicht im Vergleich zu einer Harteloxalschicht ein Korrosionsschutz der beschichteten Bauteile deutlich verbessert.

Prinzipiell kann der Steckverbinder auch als eine Buchse verwendet werden. Der Steckverbinder kann daher auch eine beispielsweise an einem Gerät montierte Buchse sein.

Besonders vorteilhaft ist es, wenn eine Oberfläche des Steckergehäuses vollständig mit der amorphen Kohlenstoffschicht beschichtet ist, so kann zumindest sichergestellt werden, dass es an keiner Stelle des Steckergehäuses zu einer Korrosion kommen kann. Das Steckergehäuse kann auch einen aus einem Metall ausgebildeten Verbindungsabschnitt zur Verbindung des Steckverbinders mit einem Lichtwellenleiter aufweisen. Der Verbindungsabschnitt bildet dann ein zu einem Steckerende des Steckergehäuses abgewandtes Ende aus. Wenn das Steckergehäuse einstückig ausgebildet ist, ist der Verbindungsabschnitt an dem Steckergehäuse angeformt. Das Steckergehäuse kann jedoch auch mehrteilig ausgebildet sein, so dass der Verbindungsabschnitt dann mit dem Kupplungsabschnitt, beispielsweise über eine Verschraubung oder ähnliches, verbunden ist. Über den Verbindungsabschnitt kann dann auch ein Lichtwellenleiter in das Steckergehäuse hineingeführt werden. An dem Verbindungsabschnitt können dann auch Dichtungen, flexible Tüllen, Verschraubungen und ähnliche Komponenten zur Abdichtung eines Lichtwellenleiters an dem Steckergehäuse und als Knickschutz ausgebildet sein. Weiter kann im Bereich des Verbindungsabschnitts eine Zugentlastung für den Lichtwellenleiter sowie eine Verschraubung oder Quetschhülse zur Aufnahme einer Ummantelung des Lichtwellenleiters vorgesehen sein.

Der Kupplungsabschnitt kann zumindest einen bogenförmigen Vorsprung mit einem Gewindeabschnitt ausbilden, wobei der Vorsprung mit einem übereinstimmend ausgebildeten weiteren bogenförmigen Vorsprung mit einem weiteren Gewindeabschnitt eines weiteren Steckverbinders oder einer Buchse verbindbar sein kann. Der bogenförmige Vorsprung kann insbesondere kreisringsegmentförmig ausgebildet sein und zusammen mit dem weiteren bogenförmigen Vorsprung des weiteren Steckverbinders oder der Buchse einen vollständig geschlossenen Kreisring ausbilden. Auch kann der Kupplungsabschnitt jeweils zwei oder mehr derartige Vorsprünge aufweisen, die beispielsweise unterschiedlich große Kreisringsegmente ausbilden, so dass nur ein Zusammenstecken von gegenüberliegenden Kupplungsabschnitten in einer definierten Position möglich ist. Der Gewindeabschnitt kann über den gesamten Vorsprung oder nur über einen Abschnitt des Vorsprungs verlaufen. So kann dann beispielsweise die Verriegelungshülse alleine auf den weiteren Gewindeabschnitt aufgeschraubt werden, wobei eine weitere Verriegelungshülse eines weiteren Steckverbinders dann alleine über den Gewindeabschnitt des Steckverbinders aufgeschraubt werden kann. Die jeweiligen Gewindeabschnitte können dann in einer zusammengesteckten Position der Steckverbinder in axialer Richtung voneinander beabstandet sein.

Die Verriegelungshülse kann aus einem Metall ausgebildet sein, wobei die Verriegelungshülse ein Innengewinde ausbilden kann, welches mit einem weiteren Gewindeabschnitt eines weiteren Steckverbinders oder einer Buchse verbindbar sein kann. Das Innengewinde kann beispielsweise übereinstimmend mit einem Gewindeabschnitt des Kupplungsabschnitts ausgebildet sein. Das Metall kann dem des Steckergehäuses entsprechen. Die Verriegelungshülse kann eine Ummantelung aus Gummi oder einem ähnlichen Material zum Schutz und zur einfachen Handhabung der Verriegelungshülse aufweisen. Da die Verriegelungshülse relativ zum Steckergehäuse radial drehbar und axial verschiebbar ist, kann die Verriegelungshülse auch unmittelbar auf der Führungshülse des Steckergehäuses anliegen und beispielsweise mit der Führungshülse eine Spielpassung ausbilden. Die Führungshülse kann von dem Kupplungsabschnitt oder einem Verbindungsabschnitt des Steckergehäuses ausgebildet oder ein eigenständiges Bauteil des Steckergehäuses sein.

Die Positioniereinrichtung kann einen Positionierstift und eine Positionierbohrung aufweisen, die mit einem übereinstimmend ausgebildeten weiteren Positionierstift einer weiteren Positionierbohrung eines weiteren Steckverbinders oder einer Buchse verbindbar sind. Der weitere Steckverbinder kann dann eine baugleich ausgebildete weitere Positioniereinrichtung aufweisen, so dass beide Positioniereinrichtungen mit ihren jeweiligen Positionierstiften und Positionierbohrungen ineinander gesteckt werden können. Da in der Positioniereinrichtung das Faserende der optischen Faser aufgenommen ist, kann durch die Lage des Positionierstifts in der Positionierbohrung das Faserende relativ zu einem gegenüberliegenden Faserende des weiteren Steckverbinders positioniert werden. Dabei ist von Bedeutung, dass eine besonders genaue Lagetoleranz des Positionierstifts der Positionierbohrung und des Faserendes eingehalten wird, um möglichst Übertragungsverluste bei der Steckverbindung zu minimieren.

Besonders vorteilhaft ist es, wenn die Positioniereinrichtung aus einem aus einem Metall, vorzugsweise einer Kupfer-, Nickel-, Zink-Legierung, ausgebildeten Einsatzkörper und zumindest einer daran angeordneten Linse und einer Ferrule ausgebildet ist. Die Kuper-, Nickel-, Zink-Legierung kann insbesondere aus Neusilber und damit vergleichsweise korrosionsbeständig sein. Der Einsatzkörper lässt sich dann auch besonders gut spanend bearbeiten. Beispielsweise kann an dem Einsatzkörper eine Durchgangsbohrung zur Aufnahme eines Faserendes einer optischen Faser ausgebildet sein. In die Durchgangsbohrung kann beispielsweise auch eine Ferrule eingesetzt sein, die das Faserende haltert. An einem Steckerende der Durchgangsbohrung kann dann die Linse zur Kollimation bzw. Aufweitung eines Strahlengangs von aus dem Faserende austretenden bzw. eintretenden Licht angeordnet sein. Die Linse kann in eine Fassung eingesetzt bzw. eingeklebt sein, wobei der Einsatzkörper die Fassung ausbilden kann. Der Einsatzkörper selbst kann einen Durchmesser aufweisen, der an einen Innendurchmesser des Steckergehäuses angepasst ist. Dabei kann vorgesehen sein, den Einsatzkörper mittels einer Ringdichtung gegenüber dem Steckergehäuse abzudichten. Die Ferrule kann im Wesentlichen rotationssymmetrisch und aus einem Metall ausgebildet sein. Die Ferrule kann ebenfalls eine Durchgangsbohrung aufweisen, die an einen Durchmesser des Faserendes angepasst ist. Das Faserende der optischen Faser kann in die Ferrule eingeklebt bzw. an dieser durch beispielsweise Crimpen befestigt sein.

Die Positioniereinrichtung kann 2, vorzugsweise 4, besonders bevorzugt 8 oder mehr Linsen und Ferrulen aufweisen. Der Einsatzkörper kann dann eine entsprechende Anzahl von Durchgangsbohrungen aufweisen, in die jeweils Ferrulen und Linsen eingesetzt sind. Auch kann vorgesehen sein, dass die Positioniereinrichtung bis zu 16 Linsen und Ferrulen aufweist. Mit zunehmender Anzahl der im Einsatzkörper zu positionierenden Faserenden kann ein besonders großes Datenvolumen über eine Steckverbindung übertragen werden, jedoch wird insbesondere der Einsatzkörper auch schwerer herstellbar, da besonders enge Lagetoleranzen für die Durchgangsbohrungen einzuhalten sind und mit der Anzahl der Durchgangsbohrungen eine Wahrscheinlichkeit von Fehlern bei einer Herstellung steigt.

Aufnahmebohrungen für Linsen an dem Einsatzkörper können mit einem Lagerversatz in radialer Richtung relativ zu einem Außendurchmesser des Einsatzkörpers an einem Steckerende von maximal 15 µm, bevorzugt maximal 10 µm, besonders bevorzugt maximal 5 µm, ausgebildet sein. Eine Exzentrizität der Aufnahmebohrungen bzw. Durchgangsbohrungen relativ zu einer Längsachse des Steckverbinders bzw. des Einsatzkörpers ist demnach derart definiert, dass eine Anzahl von Linsen in einer kreisringförmigen Anordnung um die Längsachse positioniert ist. Die angegebenen Toleranzen für den Lagerversatz betreffen dabei auch einen Relativabstand der Aufnahmebohrungen. Ein Lagerversatz darf zumindest nicht so groß sein, dass eine Qualität einer Signalübertragung zwischen zwei Steckverbindern besonders negativ beeinflusst wird. Ein Außendurchmesser des Einsatzkörpers kann ebenfalls mit einer derartigen Toleranz ausgebildet sein.

Auch die Ferrule kann zur Aufnahme eines Faserendes einer optischen Faser eines Lichtwellenleiters mit einer Durchgangsbohrung ausgebildet sein, wobei die Ferrule aus einem Metall, vorzugsweise einer Kupfer-, Nickel-, Zink-Legierung ausgebildet sein kann. Alternativ kann die Ferrule auch aus Kuper oder einer Kupferlegierung oder einer anderen geeigneten Metalllegierung ausgebildet sein, die eine vergleichsweise verbesserte Wärmeleitfähigkeit aufweist.

Die Verriegelungshülse, der Kupplungsabschnitt, die Führungshülse, die Ferrule, die Linse und/oder der Einsatzkörper können zumindest teilweise, vorzugsweise vollständig mit einer amorphen Kohlenstoffschicht beschichtet sein. So kann sichergestellt werden, dass diese Bauteile allseitig an ihrer jeweiligen Oberfläche geschützt sind. Der Einsatzkörper kann dann auch aus Neusilber ausgebildet und mit der amorphen Kohlenstoffschicht beschichtet sein. Bisher war es nicht möglich einen aus Neusilber ausgebildeten Einsatzkörper mit einer Harteloxalschicht ergänzend gegen Korrosion zu schützen. Auch wird eine Abführleistung von Wärmeenergie durch eine vergleichsweise gute Wärmeleitfähigkeit und optische Transparenz der amorphen Kohlenstoffschicht vorteilhaft unterstützt. Besonders vorteilhaft ist, dass die amorphe Kohlenstoffschicht vom Ultravioletten bis ins ferne Infrarot (> 800 nm) optisch transparent ist. So kann beispielsweise die Linse zunächst an bzw. in dem Einsatzkörper angeordnet und dann zusammen mit dem Einsatzkörper mit der amorphen Kohlenstoffschicht beschichtet werden. Die Linse ist dann gegenüber eventuellen Verschmutzungen und Beschädigungen unempfindlich, ohne dass die optischen Eigenschaften der Linse wesentlich beeinflusst werden.

Die amorphe Kohlenstoffschicht kann mit einem DLC-Beschichtungsverfahren (Diamond-Like-Carbon) aufgebracht sein. Mit einem derartigen Verfahren kann ein diamantähnlicher Kohlenstoff auf einer Oberfläche der betreffenden Bauteile aufgebracht werden. Eine derartige Beschichtung ist bis 400 °C oder auch 600 °C temperaturstabil, so dass eine Beschädigung der Bauteile durch Wärmeeinwirkung verhindert werden kann. Weiter kann eine besonders glatte Oberfläche durch die Beschichtung erhalten werden, wodurch ein Anhaften von Verunreinigungen an den Bauteilen vermieden werden kann.

Die amorphe Kohlenstoffschicht kann eine Dicke von maximal 5 µm, bevorzugt maximal 3 µm, besonders bevorzugt maximal 1,5 µm, ± 0,5 µm, aufweisen. Eine amorphe Kohlenstoffschicht dieser Dicke ist ausreichend fest und widerstandsfähig gegenüber eventuellen Beschädigungen bei einer Handhabung. Weiter kann die Schichtdicke unabhängig von einer Oberflächenkontur ausgebildet werden. Darüber hinaus ist es möglich, bei einer spanenden Bearbeitung der jeweiligen Bauteile die Dicke der amorphen Kohlenstoffschicht zu vernachlässigen oder gegebenenfalls bei Bedarf zu berücksichtigen.

Die amorphe Kohlenstoffschicht kann eine wasserstofffreie amorphe Kohlenstoffschicht, eine tetraedrische wasserstofffreie amorphe Kohlenstoffschicht, eine metallhaltige wasserstofffreie amorphe Kohlenstoffschicht, eine wasserstoffhaltige amorphe Kohlenstoffschicht mit einem Wasserstoffanteil von < 35%, eine tetraedrische wasserstoffhaltige amorphe Kohlenstoffschicht mit einem Wasserstoffanteil von < 25%, eine metallhaltige wasserstoffhaltige amorphe Kohlenstoffschicht oder eine modifizierte, mit zumindest einem der Elemente Silizium, Sauerstoff, Stickstoff, Fluor und/oder Bor dotierte, wasserstoffhaltige amorphe Kohlenstoffschicht sein. Derartige Kohlenstoffschichten sind aufgrund ihrer Bindungsstruktur im Wesentlichen einer Diamantschicht gleichzusetzen. Auch kann eine Kohlenstoffschicht ausgebildet werden, die eine besonders hohe Verschleißfestigkeit und einen geringen Reibkoeffizienten aufweist. Eine Dotierung der amorphen Kohlenstoffschicht mit zumindest einem der Elemente Silizium, Sauerstoff, Stickstoff, Fluor und Bor ermöglicht eine wesentliche Beeinflussung der Eigenschaften der Kohlenstoffschicht. Beispielsweise kann mittels Silizium eine Temperaturbeständigkeit in sauerstoffhaltiger Umgebung erhöht werden.

Die erfindungsgemäße Lichtwellenleiterkonfiguration umfasst einen Lichtwellenleiter und einen daran befestigten erfindungsgemäßen Steckverbinder. An den jeweiligen Enden des Lichtwellenleiters kann jeweils ein Steckverbinder befestigt sein. Der Lichtwellenleiter kann eine Multimodefaser oder eine Monomodefaser aufweisen. Weitere vorteilhafte Ausführungsformen der Lichtwellenleiterkonfiguration ergeben sich aus den Merkmalsbeschreibungen der auf den Vorrichtungsanspruch 1 zurückbezogenen Unteransprüche.

Bei dem erfindungsgemäßen Verfahren zur Herstellung eines Steckverbinders zur lösbaren Verbindung von Lichtwellenleitern, insbesondere Linsenstecker oder dergleichen, wird der Steckverbinder mit einer Positioniereinrichtung zur Aufnahme und Positionierung eines Faserendes einer optischen Faser eines Lichtwellenleiters, einem Steckergehäuse zur Aufnahme der Positioniereinrichtung und einem relativ zum Steckergehäuse radial drehbaren und axial verschiebbaren Handgriff ausgebildet, wobei der Handgriff eine Verriegelungshülse und das Steckergehäuse einen Kupplungsabschnitt, welcher aus einem Metall ausgebildet wird, zur Verbindung und Verriegelung des Steckverbinders mit einer weiteren Steckverbinder oder einer Buchse aufweisen, wobei eine Führungshülse für die Verriegelungshülse von dem Steckergehäuse ausgebildet wird, wobei das Steckergehäuse zumindest teilweise mit einer amorphen Kohlenstoffschicht beschichtet wird. Hinsichtlich der Vorteile des erfindungsgemäßen Verfahrens wird auf die Vorteilsbeschreibung der erfindungsgemäßen Vorrichtung verwiesen. Weitere vorteilhafte Ausführungsformen des Verfahrens ergeben sich aus den Merkmalsbeschreibungen der auf den Vorrichtungsanspruch 1 zurückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine Seitenansicht eines Steckverbinders;
- **Fig. 2**: eine Schnittansicht des Steckverbinders aus **Fig. 1** entlang einer Linie **II-II;**
- **Fig. 3**: eine Explosionsdarstellung des Steckverbinders.

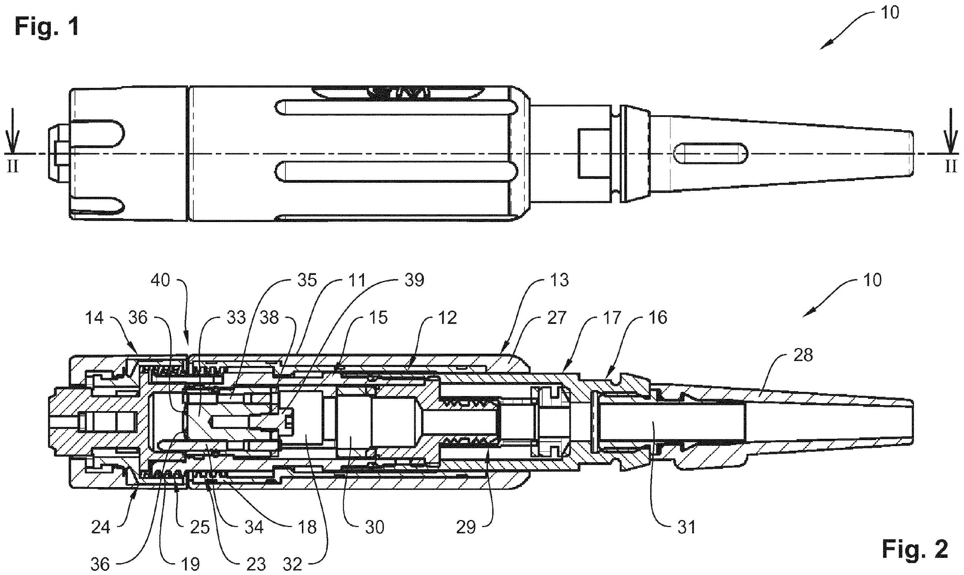

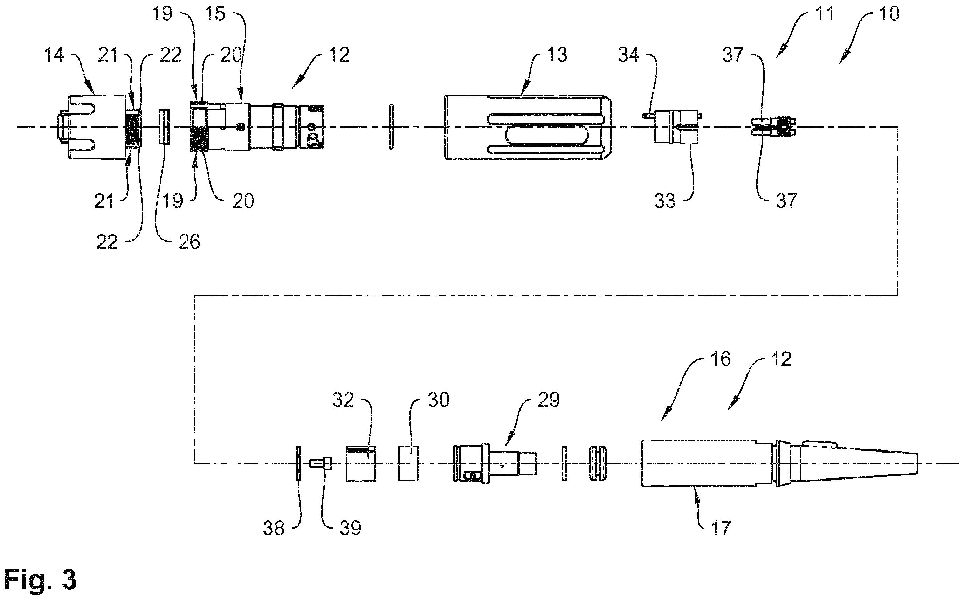

Eine Zusammenschau der **Fig. 1** bis **3** zeigt einen Steckverbinder 10 bzw. Linsenstecker zur lösbaren Verbindung von Lichtwellenleitern. Der Steckverbinder 10 ist hier ohne einen Lichtwellenleiter dargestellt und kann mit einem weiteren derartigen Steckverbinder oder einer Buchse verbunden werden. Der Steckverbinder 10 umfasst eine Positioniereinrichtung 11 zur Aufnahme und Positionierung eines Faserendes einer optischen Faser des hier nicht dargestellten Lichtwellenleiters, ein Steckergehäuse 12 zur Aufnahme der Positioniereinrichtung 11 und einen relativ zu dem Steckergehäuse 12 radial drehbaren und axial verschiebbaren Handgriff 13. Weiter weist der Steckverbinder 10 eine ergänzende Staubschutzkappe 14 auf, mit der der Steckverbinder 10, sofern er nicht eingesetzt wird, verschraubt bzw. abgedeckt werden kann.

Das Steckergehäuse 12 umfasst einen hülsenförmigen Kupplungsabschnitt 15 und einen ebenfalls hülsenförmig ausgebildeten Verbindungsabschnitt 16, wobei der Verbindungsabschnitt 16 eine Führungshülse 17 für eine Verriegelungshülse 18 des Handgriffs 13 ausbildet. Zumindest der Kupplungsabschnitt 15 bzw. das Steckergehäuse 12 ist mit einer amorphen Kohlenstoffschicht beschichtet, wobei vorzugsweise auch der Verbindungsabschnitt 16 bzw. die Führungshülse 17 und die Verriegelungshülse 18 mit einer amorphen Kohlenstoffschicht beschichtet sind.

Der Kupplungsabschnitt 15 bildet zwei Vorsprünge 19 mit Gewindeabschnitten 20 aus. Wie bei einem hier nicht dargestellten weiteren Steckverbinder sind an der Staubschutzkappe 14 weitere Vorsprünge 21 mit weiteren Gewindeabschnitten 22 ausgebildet, derart, dass die Vorsprünge 19 und die weiteren Vorsprünge 21 ineinander gesteckt werden können. Die Verriegelungshülse 18 weist ein Innengewinde 23 auf, welches auf die weiteren Gewindeabschnitte 22 aufschraubbar ist. Analog weist eine weitere Verriegelungshülse 24 der Staubschutzkappe 14 ein Innengewinde 25 auf, welches auf die Gewindeabschnitte 20 aufschraubbar ist. So wird es möglich, die Staubschutzkappe 14 analog zu einem weiteren Steckverbinder auch mit dem Kupplungsabschnitt 15 und der Verriegelungshülse 18 lösbar zu verbinden. Mittels einer Dichtung 26 kann dabei ein Eindringen von Schmutz und Feuchtigkeit verhindert werden.

Ebenfalls zum Schutz gegen Stöße oder Verunreinigungen weist der Handgriff 13 eine Griffhülse 27 aus Gummi auf, die die Verriegelungshülse 18 vollständig umgibt. Auch an dem Verbindungsabschnitt 16 ist eine Tülle 28 aus Gummi angeordnet, die ein unerwünschtes Abknicken eines Lichtwellenleiters verhindern soll. Weiter sind innerhalb des Verbindungsabschnitts 16 eine Crimphülse 29, eine Feder 30 und ein Anschlussstück 31 für die Tülle 28 angeordnet. Innerhalb des Kupplungsabschnitts 15 sind die Positioniereinrichtung 11 und ein Abstandhalter 32 angeordnet. Die Positioniereinrichtung 11 umfasst einen Einsatzkörper 33 mit einem Positionierstift 34 und einer Positionierbohrung 35, die mit einer weiteren Positionierbohrung bzw. einem weiteren Positionierstift eines weiteren Steckverbinders oder einer Buchse verbindbar sind. Weiter umfasst die Positioniereinrichtung 11 eine Anzahl von Linsen 36 und jeweils zugehörigen Ferrulen 37, innerhalb derer jeweils ein Faserende gehaltert werden kann. Die Ferrulen 37 können zusammen mit dem jeweiligen Faserende in hier nicht dargestellte Aufnahmebohrungen in den Einsatzkörper 33 eingesetzt und mittels eines Federhalters 38 und einer Schraube 39 gesichert werden. Die Linsen 36 sind an einem Steckerende 40 des Steckverbinders 10 an dem Einsatzkörper 33 angeordnet bzw. verklebt.

## Patentansprüche

1. Steckverbinder (10) zur lösbaren Verbindung von Lichtwellenleitern, insbesondere Linsenstecker oder dergleichen, wobei der Steckverbinder eine Positioniereinrichtung (11) zur Aufnahme und Positionierung eines Faserendes einer optischen Faser eines Lichtwellenleiters, ein Steckergehäuse (12) zur Aufnahme der Positioniereinrichtung und einen relativ zum Steckergehäuse radial drehbaren und axial verschiebbaren Handgriff (13) umfasst, wobei der Handgriff eine Verriegelungshülse (18) und das Steckergehäuse einen aus einem Metall ausgebildeten Kupplungsabschnitt (15) zur Verbindung und Verriegelung des Steckverbinders mit einem weiteren Steckverbinder oder einer Buchse aufweisen, wobei das Steckergehäuse eine Führungshülse (17) für die Verriegelungshülse ausbildet,
**dadurch gekennzeichnet,**
**dass** das Steckergehäuse zumindest teilweise mit einer amorphen Kohlenstoffschicht beschichtet ist.

2. Steckverbinder nach Anspruch 1,
**dadurch gekennzeichnet,**
**dass** eine Oberfläche des Steckergehäuses (12) vollständig mit der amorphen Kohlenstoffschicht beschichtet ist.

3. Steckverbinder nach Anspruch 1 oder 2,
**dadurch gekennzeichnet,**
**dass** das Steckergehäuse (12) einen aus einem Metall ausgebildeten Verbindungsabschnitt (16) zur Verbindung des Steckverbinders (10) mit einem Lichtwellenleiter aufweist.

4. Steckverbinder nach einem der vorangehenden Ansprüche,
**dadurch gekennzeichnet,**
**dass** der Kupplungsabschnitt (15) zumindest einen bogenförmigen Vorsprung (19) mit einem Gewindeabschnitt (20) ausbildet, wobei der Vorsprung mit einem übereinstimmend ausgebildeten weiteren bogenförmigen Vorsprung (21) mit einem weiteren Gewindeabschnitt (22) eines weiteren Steckverbinders, einer Buchse oder einer Staubschutzkappe (14) des Steckverbinders (10) verbindbar ist.

5. Steckverbinder nach einem der vorangehenden Ansprüche,
**dadurch gekennzeichnet,**
**dass** die Verriegelungshülse (18) aus einem Metall ausgebildet ist, wobei die Verriegelungshülse ein Innengewinde (23) ausbildet, welches mit einem weiteren Gewindeabschnitt (22) eines weiteren Steckverbinders, einer Buchse oder einer Staubschutzkappe (14) des Steckverbinders (10) verbindbar ist.

6. Steckverbinder nach einem der vorangehenden Ansprüche,
**dadurch gekennzeichnet,**
**dass** die Positioniereinrichtung (11) einen Positionierstift (34) und eine Positionierbohrung (35) aufweist, die mit einem übereinstimmend ausgebildeten weiteren Positionierstift und einer weiteren Positionierbohrung eines weiteren Steckverbinders oder einer Buchse verbindbar sind.

7. Steckverbinder nach einem der vorangehenden Ansprüche,
**dadurch gekennzeichnet,**
**dass** die Positioniereinrichtung (11) aus einem aus einem Metall, vorzugsweise einer Kupfer-Nickel-Zink-Legierung, ausgebildeten Einsatzkörper (33) und zumindest einer daran angeordneten Linse (36) und einer Ferrule (37) ausgebildet ist.

8. Steckverbinder nach Anspruch 7,
**dadurch gekennzeichnet,**
**dass** die Positioniereinrichtung (11) zwei, vorzugsweise vier, besonders bevorzugt acht oder mehr Linsen (36) und Ferrulen (37) aufweist.

9. Steckverbinder nach Anspruch 7 oder 8,
**dadurch gekennzeichnet,**
**dass** Aufnahmebohrungen für Linsen (36) an dem Einsatzkörper (33) mit einem Lageversatz in radialer Richtung relativ zu einem Außendurchmesser des Einsatzkörpers an einem Steckerende (40) von maximal 15µm, bevorzugt maximal 10µm, besonders bevorzugt maximal 5µm, ausgebildet sind.

10. Steckverbinder nach einem der Ansprüche 7 bis 9,
**dadurch gekennzeichnet,**
**dass** die Ferrule (37) zur Aufnahme eines Faserendes einer optischen Faser eines Lichtwellenleiters mit einer Durchgangsbohrung ausgebildet ist, wobei die Ferrule aus einem Metall, vorzugsweise einer Kupfer-Nickel-Zink-Legierung, ausgebildet ist.

11. Steckverbinder nach einem der Ansprüche 7 bis 10,
**dadurch gekennzeichnet,**
**dass** die Verriegelungshülse (18), der Kupplungsabschnitt (15), die Führungshülse (17), die Ferrule (37), die Linse (36) und/oder der Einsatzkörper (33) zumindest teilweise, vorzugsweise vollständig mit einer amorphen Kohlenstoffschicht beschichtet ist beziehungsweise sind.

12. Steckverbinder nach einem der vorangehenden Ansprüche,
**dadurch gekennzeichnet,**
**dass** die amorphe Kohlenstoffschicht mit einem DLC-Beschichtungsverfahren aufgebracht ist.

13. Steckverbinder nach einem der vorangehenden Ansprüche,
**dadurch gekennzeichnet,**
**dass** die amorphe Kohlenstoffschicht eine Dicke von maximal 5µm, bevorzugt maximal 3µm, besonders bevorzugt maximal 1,5µm ± 0,5µm, aufweist.

14. Steckverbinder nach einem der vorangehenden Ansprüche,
**dadurch gekennzeichnet,**
**dass** die amorphe Kohlenstoffschicht eine wasserstofffreie amorphe Kohlenstoffschicht, eine tetraedrische wasserstofffreie amorphe Kohlenstoffschicht, eine metallhaltige wasserstofffreie amorphe Kohlenstoffschicht, eine wasserstoffhaltige amorphe Kohlenstoffschicht mit einem Wasserstoffanteil von > 35 %, eine tetraedrische wasserstoffhaltige amorphe Kohlenstoffschicht mit einem Wasserstoffanteil von > 25 %, eine metallhaltige wasserstoffhaltige amorphe Kohlenstoffschicht oder eine modifizierte, mit zumindest einem der Elemente Si, O, N, F und/oder B dotierte, wasserstoffhaltige amorphe Kohlenstoffschicht ist.

15. Lichtwellenleiterkonfiguration, umfassend einen Lichtwellenleiter und einen daran befestigten Steckverbinder,
**dadurch gekennzeichnet,**
**dass** die Lichtwellenleiterkonfiguration einen Steckverbinder (10) nach einem der vorangehenden Ansprüche aufweist.

16. Verfahren zur Herstellung eines Steckverbinders (10) zur lösbaren Verbindung von Lichtwellenleitern, insbesondere Linsenstecker oder dergleichen, wobei der Steckverbinder mit einer Positioniereinrichtung (11) zur Aufnahme und Positionierung eines Faserendes einer optischen Faser eines Lichtwellenleiters, einem Steckergehäuse (12) zur Aufnahme der Positioniereinrichtung und einem relativ zum Steckergehäuse radial drehbaren und axial verschiebbaren Handgriff (13) ausgebildet wird, wobei der Handgriff eine Verriegelungshülse (18) und das Steckergehäuse einen Kupplungsabschnitt (15), welcher aus einem Metall ausgebildet wird, zur Verbindung und Verriegelung des Steckverbinders mit einem weiteren Steckverbinder oder einer Buchse aufweisen, wobei eine Führungshülse (17) für die Verriegelungshülse von dem Steckergehäuse ausgebildet wird,
**dadurch gekennzeichnet,**
**dass** das Steckergehäuse zumindest teilweise mit einer amorphen Kohlenstoffschicht beschichtet wird.
